# EUROPEAN PATENT SPECIFICATION

(11) **EP 1 867 949 B1**
(45) Date of publication and mention of the grant of the patent: **18.03.2009**
(21) Application number: 05788139.3
(22) Date of filing: 26.09.2005
(51) Int. Cl.: G01B 15/02, G01N 23/225

(54) **METHOD OF MEASURING FILM THICKNESS OF SURFACE OXIDE FILM OF ZINC-BASED PLATED STEEL SHEET**
VERFAHREN ZUR MESSUNG DER FILMDICKE EINES OBERFLÄCHENOXIDFILMS EINES MIT ZINK GALVANISIERTEN STAHLBLECHS
PROCÉDÉ DE MESURE D'ÉPAISSEUR DE FILM D'OXYDE SUPERFICIEL DE FEUILLE D'ACIER PLAQUÉE À BASE DE ZINC

(43) Date of publication of application: 19.12.2007
(73) Proprietor: JFE Steel Corporation, Tokyo, 100-0011 (JP)
(72) Inventor: NORO, Hisato, Tokyo 1000011 (JP); NAGOSHI, Masayasu, Tokyo 1000011 (JP); TAIRA, Shoichiro, Tokyo 1000011 (JP); SUGIMOTO, Yoshiharu, Tokyo 1000011 (JP); SATO, Shigeomi, Tokyo 1000011 (JP)
(74) Representative: Grünecker, Kinkeldey, Stockmair & Schwanhäusser Anwaltssozietät
(86) International application number: PCT/JP2005/018219
(87) International publication number: WO 2007/034572

(56) References cited:
- WO-A1-94/08232
- JP-A- 2 083 439
- JP-A- 7 280 750
- JP-A- 9 145 344
- JP-A- 10 104 178
- JP-A- 10 104 178
- JP-A- 2005 098 922
- JP-A- 2005 098 923
- JP-A- 2005 345 163
- JP-A- 2005 345 163
- US-A- 3 790 792
- MITCHELL D.F. AND SEWELL P.B.: "Quantitative determination of oxygen in thin oxide films on metals by electron-excited X-ray emission" THIN SOLID FILMS, vol. 23, no. 1, August 1974 (1974-08), pages 109-125, XP002467376 Switzerland
- HOMBOURGER C ET AL: "Thickness determination of very thin SiO2 films on Si by electron-induced x-ray emission spectroscopy" 7 October 2002 (2002-10-07), APPLIED PHYSICS LETTERS, AIP, AMERICAN INSTITUTE OF PHYSICS, MELVILLE, NY, US, PAGE(S) 2740-2742 , XP012032120 ISSN: 0003-6951 * the whole document *
- LOVE G. AND SCOTT V. D.: "Electron probe microanalysis using soft X-rays - a review. Part 1: Instrumentation, spectrum processing and detection sensitivity" JOURNAL OF MICROSCOPY, vol. 201, January 2001 (2001-01), pages 1-32, XP002467377

## Description

### Technical Field

The present invention relates to a technique for promptly measuring the thickness of an oxide film that has a thickness in the range of 10 nm to 100 nm and is formed on a galvanized steel sheet.

### Background Art

In some of products such as steel, semiconductors, and displays, a surface film having a thickness in the range of several tens to several hundreds of nanometers is a controlling factor for the product characteristics. In steel products, a surface thin film having a thickness in the range of several tens to several hundreds of nanometers may be a controlling factor for the press formability of the products. In recent years, steel sheets for automobiles or household electrical appliances are often galvanized to improve their corrosion resistance. When a galvanized steel sheet is pressed so as to fabricate a component that is difficult to form, the steel sheet has a tendency to break at a portion that is difficult to process. One known method improves the press formability of galvanized steel sheets by using viscous lubricating oil in press forming. However, in this method, incomplete degreasing after the press forming may cause nonuniformity in conversion treatment or coating in downstream processes.

To address such problems in the downstream processes, according to another known method, a lubricating film is formed on a plated layer. For example, Patent Documents 1 to 3 disclose techniques of applying electric field treatment, dip treatment, oxidation treatment after coating, or heat treatment to the surface of a galvanized steel sheet to form a zinc oxide-based oxide film, thus improving weldability or moldability. Patent Document 4 discloses a technique of forming a phosphorylated compound-based oxide film on a galvanized steel sheet by dipping the galvanized steel sheet into an aqueous solution containing 5-60 g/l sodium phosphate and having pH 2-6, electrolyzing the galvanized steel sheet, or applying the aqueous solution to the galvanized steel sheet, thus improving press formability and conversion treatment. Patent Document 5 discloses a technique of forming Ni oxide on a galvanized steel sheet by electrolysis treatment, dip treatment, coating treatment, oxidation treatment after coating, or heat treatment, thus improving press formability and conversion treatment.

In such methods in which an oxygen-containing lubricating film (lubricating oxide film) is formed on a plated layer, prompt measurement of the thickness of the oxide film is very important in adjusting and controlling product characteristics. Existing measurement techniques of the thickness of an oxide film include (1) a combination of ion etching and surface analysis, such as Auger electron spectroscopy or X-ray photoelectron spectroscopy, for analyzing information in the depth direction, (2) observation of cross sectional samples in the thickness direction with a transmission electron microscope, and (3) optical methods such as ellipsometry, which utilizes an interference effect of light in a thin film.

Another method for measuring the thickness of oxide films of various metals, such as Al, Fe, Ni, Nb and Ta, is known for example from Publication Document 6 or Patent Document 7. This method involves measuring the intensity of the oxygen Kα line using an electron probe micro analyzer with wavelength dispersive X-ray detection and calculating the thickness of the film based on the comparison with calibration samples.
Patent Document 1: Japanese Patent Publication No. 53-60332
Patent Document 2: Japanese Patent Publication No. 2-190483
Patent Document 3: Japanese Patent Publication No. 2004-3004
Patent Document 4: Japanese Patent Publication No. 4-88196
Patent Document 5: Japanese Patent Publication No. 3-191093

Publication Document 6: D.F. Mitchell and P.B. Sewell: "Quantitative determination of oxygen in thin oxide films on metals by electron-excited X-ray emission", Thin Solid Films 23 (1974), pages 109-125

Patent Document 7: Japanese Patent Publication No. 10-104178

### Disclosure of Invention

In hot-dip galvanized steel sheets, an oxide film having a thickness as small as several nanometers formed on the plated surface is effective in improving the press formability. In particular, an oxide film having a thickness of at least 10 nm has a large improvement effect, as disclosed in Patent Document 3. Prompt measurement of the thickness of an oxide film formed on a plated surface can provide a manufacturing process with the feedback on the measurement, thereby increasing the yield of a product having excellent press formability. Furthermore, the measurement can be utilized for the decision of shipping, allowing for the quality control of a product.

Among the above-mentioned methods (1) to (3), which can be utilized for measuring the thickness of an ultrathin oxide film, the methods (1) and (2) take many hours to measure the thickness or prepare a sample. It is therefore very difficult to utilize these methods not only for providing a manufacturing process with the feedback, but also for the decision of shipping.

The method (1) requires the measurement under ultrahigh vacuum. Thus, the evacuation takes several tens of minutes to several hours even using an apparatus equipped with a pre-exhaust system. Furthermore, the thickness of an oxide film is measured by repeating ion etching at a known etching rate. Thus, the measurement takes at least several hours per sample.

The method (2) takes at least half a day to prepare one sample, another about one hour to perform the transmission electron microscopy of the sample, and another several hours to develop the electron micrograph. The measurement of film thickness therefore takes at least about one day per sample.

The optical method (3) utilizing the interferential action is suitable to measure the thickness of a thin film formed on a flat base, such as a thermally oxidized film formed on a silicon wafer. However, for example, as in galvannealed steel sheets, when an underlying galvanized steel sheet includes recessed and raised portions resulting from temper rolling or minute recessed and raised portions resulting from galvannealing, it is difficult to measure the film thickness with high accuracy.

Thus, there is presently no known technique for measuring the thickness of an ultrathin oxide film formed on a hot-dip galvanized steel sheet with high accuracy and at a speed at least avoiding a delay in shipping. The present invention was achieved in view of the situations described above. It is a main object of the present invention to provide a technique for promptly and accurately measuring the thickness of an oxide film that has a thickness in the range of 10 nm to 100 nm and is formed bn a galvanized or galvannealed steal sheet.

As a result of diligent and repeated investigations to solve the above-mentioned problems, the present inventors found that the thickness of an oxide film formed on a galvanized steel sheet and having a thickness of several tens of nanometers can be measured with high accuracy by means of an electron probe micro analyzer (EPMA, an analyzer having a basic function of measuring the intensity of characteristic X-rays of an element contained in a sample generated by irradiating the sample with an electron beam) under specific conditions.

The present invention was achieved on the basis of the finding and is summarized as follows:
(1) A method for measuring the thickness of a surface oxide film of a galvanized or galvannealed steel sheet, comprising: irradiating the galvanized or galvannealed steel sheet, having an oxide film that has a thickness in the range of 10 nm to 100 nm, with an electron beam accelerated to 3-6 kV using an electron probe micro analyzer or a scanning electron microscope equipped with a wavelength dispersive X-ray detector; and measuring the intensity of generated oxygen Kα X-rays with the detector and a subsequent pulse height analyzer to eliminate an effect of secondary zinc Lα and Lβ x-rays, and
(2) The method for measuring the thickness of a surface oxide film of a galvanized or galvannealed sheel sheet according to Claim 1, further comprising: preparing a calibration curve of the intensity of oxygen Kα X-rays versus the thickness of an oxide film using a silicon oxide film formed on a mirror polished silicon wafer, the silicon oxide film having a known thickness; and calculating the thickness of the surface oxide film of the galvanized or galvannealed steel sheet using the calibration curve.

According to the present invention, the thickness of an oxide film formed on a galvanized or galvannealed steel sheet and having a thickness in the range of 10 to 100 nm can be measured promptly with high accuracy. Furthermore, the press formability of the galvanized steel sheet can be evaluated from the measured thickness of the oxide film.

### Brief Description of the Drawings

Fig. 1 is a graph illustrating a Monte Carlo simulation of internal diffusion behavior of an electron beam when a zinc oxide thin film having a thickness of 100 nm formed on a galvanized substrate is irradiated with the electron beam at various accelerating voltages.
Fig. 2 is a characteristic X-ray spectrum of oxygen in a silicon oxide film formed on a silicon wafer measured at an accelerating voltage of 5 kV with a pulse height analyzer having different window widths: (a) at the largest window width, (b) at an optimum window width, and (c) at an excessively small window width.
Fig. 3 is a characteristic X-ray spectrum of oxygen in a zinc oxide thin film formed on a zinc substrate measured under the same conditions as in Fig. 2.
Fig. 4 is a characteristic X-ray spectrum when the same data as that in Fig. 3 is measured at a different accelerating voltage of 15 kV.
Fig. 5 is a graph illustrating the correlation between the thickness of an oxide film at a flat part of a galvannealed steel sheet and the coefficient of friction.
Fig. 6 is a graph illustrating the correlation between the average thickness of an oxide film of a hot-dip galvanized steel sheet and the coefficient of friction.

### Best Mode for Carrying Out the Invention

As a result of diligent and repeated investigations to solve the above-mentioned problems, the present inventors found that the thickness of an oxide film formed on a galvanized steel sheet and having a thickness of several tens of nanometers can be measured with high accuracy by means of an electron probe micro analyzer (EPMA; an analyzer having a basic function of measuring the intensity of characteristic X-rays of an element contained in a sample generated by irradiating the sample with an electron beam) under specific conditions.

The oxide film in the present invention may be a microscopically discontinuous oxygen-containing substance. In this case, the film thickness is a reduced thickness obtained by assuming that the oxide film is a dense and homogeneous film.

When the characteristic X-rays of oxygen (O-Kα X-rays) in an oxide film formed on a galvanized steel sheet is measured with an EPMA, the important point to note is that the secondary rays of the characteristic X-rays of zinc in the oxide film and the galvanized steel sheet (Zn-Lα X-rays and Zn-Lβ X-rays) overlap with the characteristic X-rays of oxygen at the same detection position (detection angle) of the wavelength dispersive X-ray analyzer in the EPMA. This overlap results from the secondary diffraction of the characteristic X-rays of zinc caused by an analyzing crystal. An attempt to detect the characteristic X-rays of oxygen in an ultrathin oxide film formed on a galvanized steel sheet at a typical accelerating voltage (about 15 kV) without paying attention to this point will actually result in the detection of a large amount of characteristic X-rays of zinc originating from the galvanized steel sheet.

Furthermore, even when attention is paid to this point, a pulse height analyzer cannot effectively eliminate the overlapping effect of zinc under typical acceleration conditions. A pulse height analyzer has a function of selecting the characteristic X-rays of an element of interest with the aid of a difference in energy of characteristic X-rays, as known for example from US Patent 3 790 792 or 6 Lore and V.b. Scott, J. Microsc. 201 (2001), p1-32.

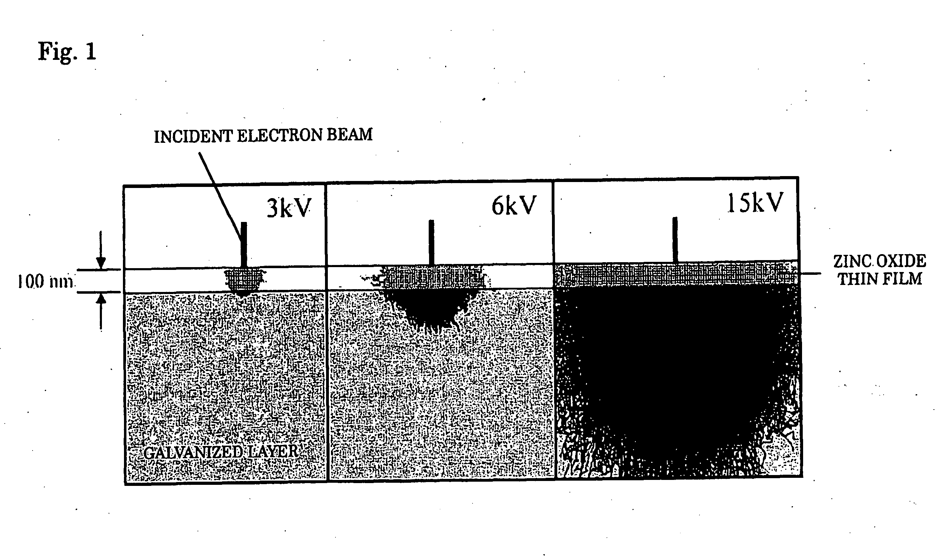

Thus, the present inventors repeatedly examined the conditions of measurements under which an electron beam can generate the characteristic X-rays of oxygen almost uniformly acrose the thickness of an oxide film and minimize the generation of the characteristic X-rays of zinc in an underlying galvanized or galvannealed steel sheet. As a result, the present inventors found that an accelerating voltage of 3-6 kv is most suitable to measure an oxide film having a thickness no more than several tens of nanometers formed on a galvanized or galvannealed steel sheet. To explain the reason, Fig. 1 illustrates the results of computer simulation in which a zinc oxide (ZnO) thin film having a thickness of 100 nm formed on a galvanized substrate is irradiated with a focused electron beam at different accelerating voltages.

The film thickness of 100 nm in the simulation is based on the largest thickness (100 nm) of an oxide film intended for the present invention.

To generate the characteristic X-rays of oxygen, oxygen must be ionized by irradiating a sample with an electron beam at an accelerating voltage of more than 0.53 kV, which corresponds to the absorption edge energy of oxygen. When an electron accelerated at a voltage corresponding to the absorption edge energy collides with the surface of a sample and loses any energy, the electron is no longer able to ionize oxygen. An electron beam must therefore be accelerated at a still higher accelerating voltage to generate characteristic X-rays having intensity depending on the thickness of the oxide film. Fig. 1 shows that an electron beam must be accelerated at an accelerating voltage of at least 3 kV so that the intensity of characteristic X-rays of oxygen increases with the thickness of the oxide film having a thickness of up to 100 nm.

However, an excessive accelerating voltage results in a large amount of characteristic X-rays of underlying zinc. Thus, the characteristic X-rays of underlying zinc are inevitably detected at the detection position of oxygen even using a pulse height analyzer. It is therefore impossible to measure only the characteristic X-rays of oxygen efficiently in this case. The maximum accelerating voltage is 6 kV because of this constraint.

EPMAs can analyze any part of the surface of a sample with an electron beam focused to a probe diameter of about 1 µm. Thus, in an oxide film formed on a substrate with an extreme roughness, as in a galvannealed steel sheet, the thickness of the oxide film can be measured without being affected by the roughness of the substrate by irradiating a flat part formed by temper rolling with an electron beam. Thus, the present invention is suitable as a method for measuring the thickness of an oxide film formed at a flat part of a galvannealed steel sheet and a hot-dip galvanized steel sheet (a galvanized steel sheet that is not annealed after plating). Furthermore, a sample stage can be driven by a computer control. Thus, the thickness distribution or the average thickness of an oxide film can be determined over a macroscopic area by scanning the irradiation position of an electron probe while driving the sample stage.

Taking a commercially available sample, such as a silicon oxide film formed on a silicon wafer and having a known thickness, as a standard sample, the measurements can easily be normalized by evaluating an unknown sample together with the standard sample. Furthermore, a calibration curve of the intensity of the characteristic X-rays of oxygen in such a standard sample versus the thickness of an oxide film allows the conversion of the thickness of an oxide film in an unknown sample into the thickness of an oxide film in the standard sample.

The components of EPMAs are almost the same as those of scanning electron microscopes equipped with a wavelength dispersive X-ray spectrometer. Hence, scanning electron microscopes equipped with wavelength dispersive X-ray detectors may be used to measure the thickness of an oxide film in place of EPMAs.

To measure the thickness of an oxide film with high accuracy, it is desirable to cut a sample into pieces that can be placed on a sample stage of an EPMA and remove contaminants deposited on the pieces by ultrasonic cleaning in an organic degreasing solvent such as toluene or ethanol for at least a few minutes.

EPMAs for use in the present invention may be commercially available apparatuses equipped with an analyzing crystal for oxygen recommended by an equipment manufacturer such as an LS7A artificial crystal from Shimadzu Corporation, a proportional counter, and a pulse height analyzer.

The accelerating voltage of EPMAs may be in the range of 3 to 6 kV. The beam current is set to give higher detection efficiency of a proportional counter within a range that does not overload an emitter. In commercially available EPMAs including a tungsten filament emitter, a suitable beam current is about 100 nA.

The diameter of an electron probe is determined for each purpose. For example, an electron probe may be most sharply focused for a small flat part of a temper-rolled galvanized steel sheet. However, in a typical EPMA used at the accelerating voltage described above, the smallest probe diameter is generally beyond 1 µm. Furthermore, an electron beam diffuses in a sample by about 0.2 µm from the irradiation point. Thus, when a flat part as small as several micrometers is analyzed, the smallest probe diameter should be determined with a luminous standard sample such as zirconia to ensure that the probe diameter is much smaller than the flat part.

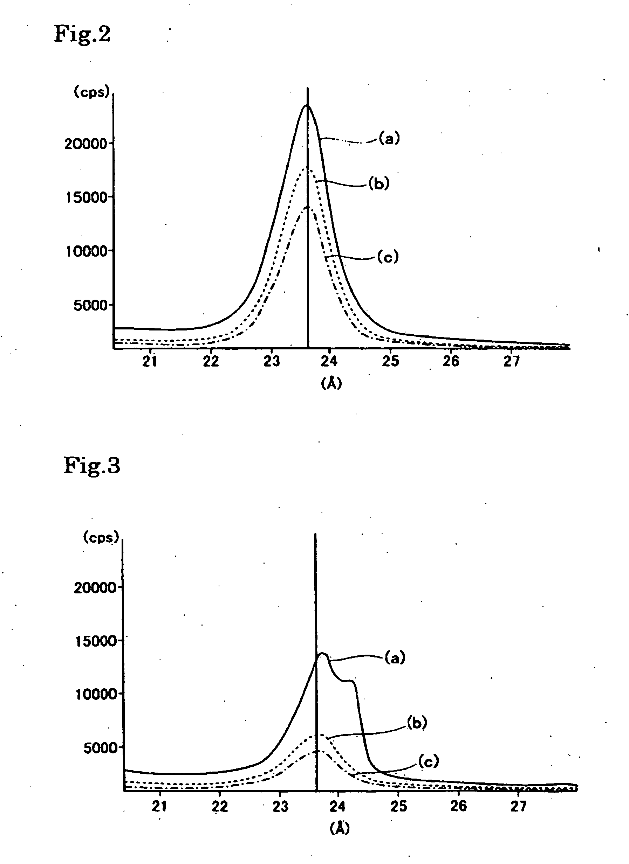

As described above, in the measurement of the characteristic X-rays of oxygen in an oxide film formed on a zinc substrate, a pulse height analyzer must be set to remove the characteristic X-rays of zinc, which appear at the same detection position as those of oxygen. Figs. 2 to 4 illustrate this situation. Fig. 2 illustrates that oxygen in a silicon oxide film formed on a silicon wafer was analyzed at 5 kV with an EPMA-1600 from Shimadzu Corporation. Fig. 2 illustrates three measurements: (a) a pulse height analyzer is opened, (b) the window width is adjusted to the characteristic X-ray energy of oxygen, and (c) the window width is further narrowed. The peak height decreases with decreasing window width.

In contrast, Fig. 3 illustrates the measurements of a zinc oxide thin film formed on a zinc substrate under the same conditions. In the state (a) where a pulse height analyzer is opened, the peak top is slightly shifted to a longer wavelength (to the right) relative to the peak position in Fig. 2. Furthermore, a shoulder peak appears on the long-wavelength side of the main peak. This is because the characteristic X-rays of oxygen (oxygen Kα X-rays) and zinc Lβ X-rays overlap each other, and zinc Lα X-rays further overlies them on the long-wavelength side. While the zinc Lβ X-rays seem to be higher than the zinc Lα X-rays in this figure, this is because the zinc Lβ X-rays and the oxygen Kα X-rays overlap each other. In nature, the Lα X-rays are higher than the Lβ X-rays.

In the state (b), the window width is narrowed such that the peak corresponding to the zinc Lα X-rays is negligible. In this state, the position of the main peak is almost the same as that of oxygen in the silicon oxide film in Fig. 2. As the window width is decreased, the detection of the zinc Lα X-rays and the zinc Lβ X-rays becomes limited, although the detection efficiency of the oxygen Kα X-rays decreases simultaneously. This is the state (c). Thus, it is important to set the window width of a pulse height analyzer to be as wide as possible within a range that the peak corresponding to the zinc Lα X-rays is negligible. A method of setting the window width may be exemplified by measuring the Kα X-rays of oxygen in a silicon oxide film having a known film thickness (for example, 96 nm) formed on a silicon wafer at the largest window width and then setting the window width such that the intensity decreases to 80% of the intensity measured at the largest window width.

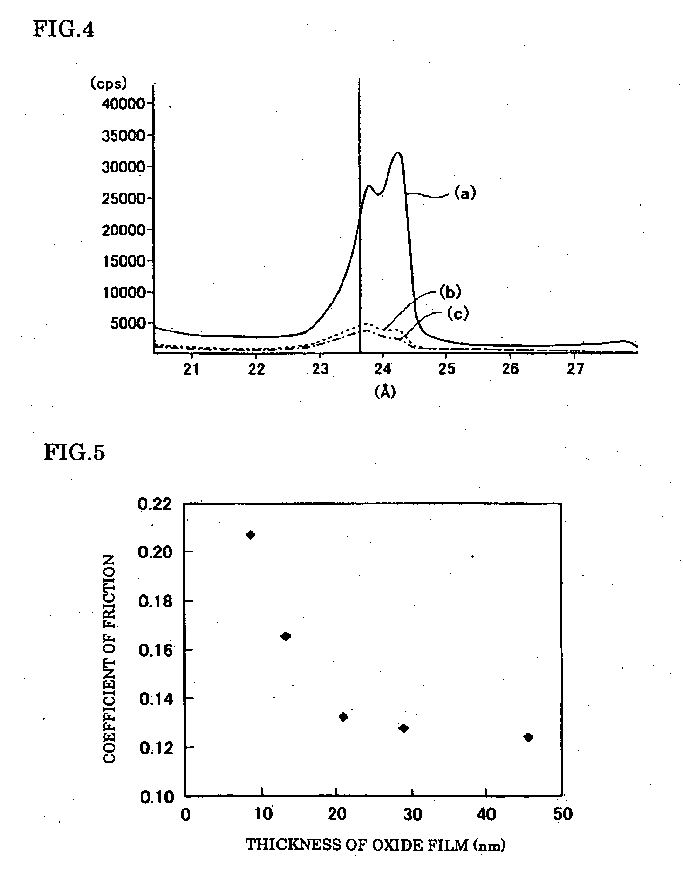

Fig. 4 is a characteristic X-ray spectrum when the same data as that in Fig. 3 is measured at a different accelerating voltage of 15 kV. As shown in this figure, a large amount of zinc Lα X-ray and Lβ X-ray generated from a zinc substrate and oxygen Kα X-ray overlay at the same detection position at such a typical accelerating voltage. Thus, even when a pulse height analyzer is set to be in the state (c), it is impossible to detect only the oxygen Kα X-rays efficiently.

The time of measurement is desirably determined in consideration of the allowable total measurement time and the relative variation. In general, the statistical relative variation is expressed by 1/√N wherein N denotes the number of counts. For example, the relative variation can be 1% or less at 10,000 counts or more. Thus, the measurement time in the range of a few seconds to several tens of seconds per point is generally practical.

A calibration curve that is prepared with a silicon oxide film formed on a mirror polished silicon wafer and having a known thickness is efficiently used to convert the intensity of characteristic X-rays of oxygen into the thickness of an oxide film. A principal reason that such a silicon oxide film having a known thickness is particularly preferred is that such a film is commercially available for depth profiling in a surface analysis (such as Auger electron spectroscopy or X-ray photoelectron spectroscopy) and is easy to obtain. Furthermore, because the calculation is based on the same standard sample as that used in an existing technology that combines a surface analysis method and ion etching to measure the thickness of a film, the results are advantageously in good agreement with those obtained by the conventional technology, despite the short measurement time.

The present invention will be further illustrated with examples below.

### EXAMPLE 1

After a galvannealed steel sheet having a thickness of 0.8 mm was temper-rolled, the steel sheet was dipped in aqueous sulfuric acid containing 20 g/l sodium acetate, pH2.0, at 50°C for one second, was left standing for a predetermined time, was washed by water, and was dried. Forty sheet samples in which zinc-based oxide (including hydroxide) was formed on a plated surface were prepared in this way. Both sides of the sheet samples were used to measure the thickness of the oxide film. The thickness of an oxide film formed on a flat part of a sheet sample was controlled by changing the predetermined standing time within the range of 2 to 60 seconds. The sheet samples were punched into disk samples having a diameter of 12 mm. The disk samples were subjected to ultrasonic cleaning in toluene for two minutes and then in ethanol for one minute, were dried by hot air, and were placed into an EPMA sample holder. ,

EPMA-1600 manufactured by Shimadzu Corporation was used for the EPMA measurement. The oxygen Kα X-rays were detected at an accelerating voltage of 5 kV, a beam current of 100 nA, and the smallest beam diameter using LS7A as an analyzing crystal. Furthermore, a pulse height analyzer was set to be optimum for the oxygen Kα X-rays according to the embodiment of the present invention. In the measurement of the oxygen Kα X-rays, in addition to the intensity at the peak position, the intensity at the background position was also measured to calculate the net intensity of the oxygen Kα X-rays. The measuring points on the sample were flat parts formed by temper rolling. Each of the disk samples was evaluated at ten measuring points for five seconds each. The average oxygen intensity of each disk sample was calculated.

Furthermore, these disk samples and silicon wafers cleaved into an appropriate size and having a silicon oxide film having a thickness of 96 nm or 20 nm thereon were placed on a sample stage. The net intensity of the oxygen Kα X-rays could also be calculated from these silicon oxide films. Ten points of each disk sample and each silicon wafer were evaluated for five seconds. The average oxygen intensity was then calculated. A calibration curve of the thickness of an oxide film versus the average oxygen intensity was prepared from these data. The thickness of an oxide film of a sample was calculated as the reduced thickness of an oxide film on a silicon oxide film basis.

The press formability of the samples whose thickness of an oxide film was measured as described above was evaluated as the coefficient of friction measured in a plate-sliding test. In the plate sliding test, a slide table was moved at 100 cm/min while a bead tool was pressed against a galvanized steel sheet fixed on the slide table at a pressing load of 400 kgf, thus providing a slide between the galvanized steel sheet and the bead. The pressing load N and the force F for moving the slide table were measured with a load cell. The coefficient of friction during the slide was calculated from the ratio of them (F/N).

The surface to be measured was previously coated with a wash oil (Preton R352L). The surface of the bead in contact with the steel sheet was a plane having a width of 10 mm and a length of 3 mm in the slide direction. The coefficient of friction thus determined represents the sliding characteristics of the bead in press forming. Hence, a smaller coefficient of friction indicates a smaller sliding resistance at the bead, indicating higher resistance to breakage in press forming.

Fig. 5 illustrates the relationship between the thickness of an oxide film thus measured and the coefficient of friction. As shown in this figure, the coefficient of friction decreases significantly with increasing thickness of an oxide Film up to about 20 nm. Thus, the control of the thickness of an oxide film thus determined permits the evaluation of the coefficient of friction, which is an important factor in the press formability of a galvanized or galvannealed steel sheet. Furthermore, establishing the threshold of the coefficient of friction while taking the press formability into account permits the judgment of necessity of press formability.

### EXAMPLE 2

Various hot-dip galvanized steel sheets that bad a thickness in the rangs of 0.8 to 1.2 mm and were temper-rolled with an electro-discharge dull roll were cut into 40-mm square samples. The square samples were subjected to ultrasonic cleaning in toluene for two minutes and then in ethanol for one minute and were dried by hot air. The thickness of an oxide film formed on these hot-dip galvanized steel sheets was spontaneously formed in a storage environment. The oxide film therefore does not necessarily cover the entire surface uniformly. In such a case, area analysis is effectively used to measure the average thickness of the oxide film.

JXA-8600MX manufactured by JEOL Ltd was used for the EPMA measurement. The accelerating voltage was 3 kV. The beam current was 120 nA. The beam diameter was 100 µm. LDE1 was used as an analyzing crystal. The oxygen Kα X-rays were measured at 200 x 200 points at intervals of 100 µm in a 20-mm square area near the center of a sample while the sample stage was moved. The measurement time was 20 milliseconds per point. The setting of a pulse height analyzer and the setting for calculating net intensity of the oxygen Kα X-rays are the same as those in Example 1. The net intensities of the points were averaged to determine the average oxygen intensity of the sample. The average oxygen intensity was converted into the thickness of the oxide film using the calibration curve prepared using the silicon oxide film together with the sample.

The press formability of the samples whose thickness of an oxide film was measured as described above was evaluated as the coefficient of friction measured in a plate-sliding test. The plate-sliding test was performed to measure the coefficient of friction in the same way as Example 1, except that the pressing load was set to be 100 or 600 kgf to change the contact pressure to 3.3 or 20 MPa, respectively. The surface to be measured was previously coated with a wash oil (Preton R352L).

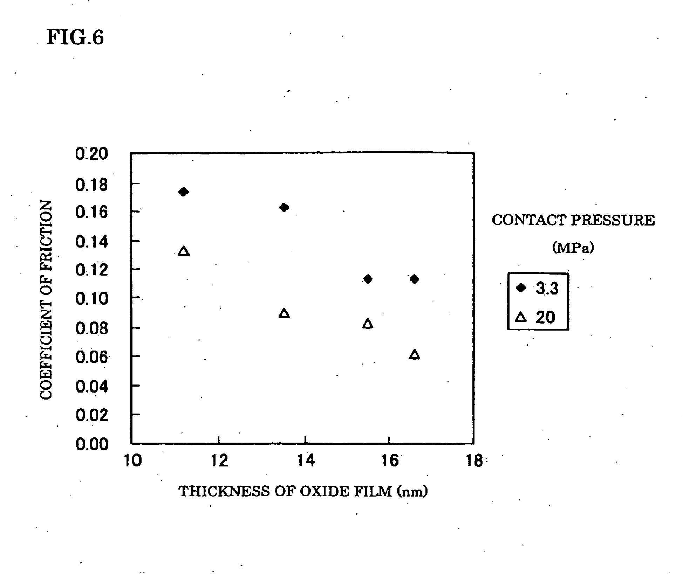

Fig. 6 illustrates the relationship between the thickness of an oxide film thus measured and the coefficient of friction. As shown in this figure, the coefficients of friction at the higher contact pressure tend to be lower than those at the lower contact pressure. For both contact pressures, the coefficient of friction reasonably decreases with increasing thickness of the oxide film.

### Industrial Applicability

The present invention can be utilized as a method for promptly measuring the thickness of an oxide film that has a thickness in the range of 10 nm to 100 nm and is formed on a galvanized steel sheet such as a hot-dip galvanized steel sheet or a galvannealed steel sheet.

The present invention can be utilized as a method for determining whether the sliding characteristic of the plated steel sheet is good or bad on the basis of the thickness of an oxide film measured as described above.

## Claims

1. A method for measuring the thickness of a surface oxide film of a galvanized or galvannealed steel sheet, comprising: irradiating the galvanized or galvannealed steel sheet, having an oxide film that has a thickness in the range of 10 nm to 100 nm, with an electron beam accelerated to 3-6 kV using an electron probe micro analyzer or a scanning electron microscope equipped with a wavelength dispersive X-ray detector; and measuring the intensity of generated oxygen Kα X-rays with a detector and a subsequent pulse height analyzer to eliminate an effect of secondary zinc Lα and Lβ X-rays.

2. The method for measuring the thickness of a surface oxide film of a galvanized or galvannealed steel sheet according to Claim 1, further comprising: preparing a calibration curve of the intensity of oxygen Kα X-rays versus the thickness of an oxide film using a silicon oxide film formed on a mirror polished silicon wafer, the silicon oxide film having a known thickness; and calculating the thickness of the surface oxide film of the galvanized or galvannealed steel sheet using the calibration curve.

## Patentansprüche

1. Verfahren zur Messung der Filmdicke eines Oberflächenoxids eines galvanisierten oder galvannealed Stahlblechs umfassend: Bestrahlen des galvanisierten oder galvannealed Stahlblechs, das einen Oxidfilm mit einer Filmdicke in dem Bereich von 10 nm bis 100 nm aufweist, mit einem auf 3-6 kV beschleunigtem Elektronenstrahl unter Verwendung einer Elektronenstrahlmikrosonde oder eines Abtastelektronenmikroskops ausgestattet mit einem wellenlängendispersiven Röntgenmikrobereichsanalysedetektor; und Messen der Intensität der erzeugten Sauerstoff-Kα Röntgenstrahlen mit einem Detektor und einem nachfolgenden Impulshöhenanalysator, um einen Effekt von zweiten Zink-Lα und Lβ-Röntgenstrahlen zu eliminieren.

2. Verfahren zur Messung der Filmdicke eines Oberflächenoxids eines galvanisierten oder galvannealed Stahlblechs nach Anspruch 1, weiterhin umfassend: Erstellen einer Eichkurve mit der Sauerstoff-Kα Röntgenstrahlenintensltät gegenüber der Filmdicke eines Oxidfilms unter Verwendung eines Siliziumoxidfilms, der auf einer spiegelpolierten Siliziumscheibe ausgebildet ist, wobei der Siliziumoxidfilm eine bekannte Filmdicke hat; und Berechnen der Filmdicke des Siliziumoxidfilms des galvanisierten oder galvannealed Stahlblechs unter Verwendung der Eichkurve.

## Revendications

1. Procédé pour mesurer l'épaisseur d'un film d'oxyde superficiel d'une tôle en acier galvanisé ou en acier recuit après galvanisation, comprenant les étapes consistant à : irradier la tôle en acier galvanisé ou en acier recuit après galvanisation, ayant un film d'oxyde qui a une épaisseur dans la plage de 10 nm à 100 nm, par un faisceau d'électrons accéléré jusqu'à 3 à 6 kV en utilisant un microanalyseur à sonde électronique ou un microscope électronique à balayage équipé d'un détecteur de rayons X à dispersion de longueur d'onde : et mesurer l'intensité des rayons X Kα de l'oxygène généré avec un détecteur et un analyseur de hauteur d'impulsion subséquent pour éliminer un effet des rayons X Lα et Lβ secondaires du zinc.

2. Procédé pour mesurer l'épaisseur d'un film d'oxyde superficiel d'une tôle en acier galvanisé ou en acier recuit après galvanisation selon la revendication 1, comprenant en outre les étapes consistant à : préparer une courbe d'étalonnage de l'intensité des rayons X Kα de l'oxygène en fonction de l'épaisseur d'un film d'oxyde en utilisant un film d'oxyde de silicium formé sur une plaquette de silicium traitée par polissage miroir, le film d'oxyde de silicium ayant une épaisseur connue ; et calculer l'épaisseur du film d'oxyde superficiel de la tôle en acier galvanisé ou en acier recuit après galvanisation en utilisant la courbe d'étalonnage.
